**Europäisches Patentamt**

**European Patent Office**

**Office européen des brevets**

(19)

(11) Veröffentlichungsnummer : **0 470 948 A2**

(12) ## EUROPÄISCHE PATENTANMELDUNG

(21) Anmeldenummer : **91890174.5**

(22) Anmeldetag : **08.08.91**

(51) Int. Cl.$^5$ : **C04B 28/22,** C04B 20/02,
// (C04B28/22, 18:04)

(30) Priorität : **08.08.90 AT 1664/90**

(43) Veröffentlichungstag der Anmeldung :
**12.02.92 Patentblatt 92/07**

(84) Benannte Vertragsstaaten :
**AT BE CH DE DK ES FR GB GR IT LI LU NL SE**

(71) Anmelder : **Köhler-Pavlik, Johann Dipl.-Ing.
Margaretenplatz 5
A-1050 Wien (AT)**

(72) Erfinder : **Talirz, Heinz, Dr.
Rennweg 4/1/53
A-1030 Wien (AT)**

(74) Vertreter : **Köhler-Pavlik, Johann, Dipl.-Ing.
Margaretenplatz 5
A-1050 Wien (AT)**

(54) **Baustoffgemisch zur Herstellung von Form- und Fertigteilen sowie Verfahren zur Herstellung der Baustoffgemische.**

(57)    Baustoffgemisch zur Herstellung von Form- und Fertigteilen, wie beispielsweise Ziegeln, Platten, Träger, Rohre usw., bestehend aus einer Grundrohstoffkomponente mit einem Anteil von 85 bis 100, vorzugsweise 90,6 bis 95,4 Gew.-%, allenfalls einem Bindemittel, vorzugsweise gelöschtem oder ungelöschtem Kalk mit einem Anteil von 0 bis 15, vorzugsweise 4,6 bis 9,4 Gew.-%, sowie Wasser. Die Grundrohstoffkomponente besteht aus tribomechanisch aktivierten Haus- und/oder Industrieabfallstoffen, insbesondere aus Schlacken und Aschen aus der Müllverbrennung oder Kraftwerken, aus Ziegel- und/oder Betonschutt bzw. Abfällen der Ziegel- und/oder Betonherstellung etc. und daß das Gewichtsverhältnis Mischung zu Wasser gleich 1 :0,05 bis 0,25 ist. Die Erfindung betrifft auch ein Verfahren zur Herstellung solcher Baustoffgemische.

EP 0 470 948 A2

Die Erfindung betrifft ein Baustoffgemisch zur Herstellung von Formund Fertigteilen, wie beispielsweise Ziegeln, Platten, Trägern, Rohren usw., bestehend aus einer Grundrohstoffkomponente mit einem Anteil von 85 bis 100, vorzugsweise 90,6 bis 95,4 Gew.-%, allenfalls einem Bindemittel, vorzugsweise gelöschtem oder ungelöschtem Kalt mit einem Anteil von 0 bis 15, vorzugsweise 4,6 bis 9,4 Gew.-% sowie Wasser.

Das heutige Bauwesen verlangt von der Baustoffindustrie neue, bessere und billigere Baustoffe. Zu den am häufigsten verwendeten Baustoffen zählt zweifellos der Zementbeton, der das moderne Bauen ganz wesentlich bestimmt. Hochbauten, Straßenbauwerke, Brücken, Behälter, Wasserbauten, Kraftwerke und eine große Zahl von anderen Bauwerken werden heutzutage zur Gänze oder teilweise aus Beton hergestellt. Der Zementbeton ist ganz ohne Zweifel ein ganz hervorragender Baustoff, nur besitzt er zwei nicht unerhebliche Nachteile. Seine Herstellung erfordert eine relativ große Menge an Zement sowie grobkörnige Zuschlagstoffe, die ökonomisch und für die Zukunft gesehen nur begrenzt zur Verfügung stehen. Für Kies, Sand und Zementrohstoffe sind zwar derzeit noch ausreichende Reserven vorhanden, örtlich werden diese Rohstoffe jedoch knapper und teurer und sie müssen mit steigenden Kosten aus immer größeren Entfernungen zu den betreffenden Baustellen transportiert werden. Aus diesem Grund erscheint es sinnvoll Überlegungen anzustellen, wie die Naturrohstoffe durch andere Materialien ersetzt werden können. Besonders ist zu prüfen, ob reelle Aussichten bestehen, die derzeit in großem Maße anfallenden Abfallstoffe in entsprechender Weise aufzubereiten und einer neuerlichen Verwertung im Bauwesen zuzuführen.

Unter Abfallstoffen versteht man im allgemeinen feste und flüssige Rückstände, die im Haushalt, Gewerbe und in der Industrie als unerwünschte Produkte anfallen. Hinsichtlich der Form der anfallenden Rückstände besteht eine große Vielfalt.Hausmüll und hausmüllähnliche Gewerbeabfälle sind ein heterogenes Gemisch aus festen mineralischen und organischen Bestandteilen, deren Zusammensetzung großen jahreszeitlichen und örtlichen Schwankungen unterliegt. Stofflich gesehen besteht der Müll in seinen Hauptbestandteilen aus Kohlenstoff, Wasserstoff, Stickstoff, Schwefel, Phosphor und Silizium. Zusätzlich sind aber auch Halogene und Metalle enthalten, die als potentielle Umweltschadstoffe anzusehen sind.

Derzeit wird der Großteil der kommunalen Abfälle auf Deponien gelagert und nur ein kleiner Teil wird verbrannt.

Gegenwärtig wird der Großteil der Müllverbrennungsrückstände auf Deponien untergebracht. Eine Deponierung dieser Rückstände muß aber aufgrund ihrer chemischen und physikalischen Eigenschaften besonders im Hinblick auf eine Gefährdung des Grundwassers bzw. sonstiger Gewässer als äußerst problematisch bewertet werden.

Dies hat insbesondere für die Flugaschen eine spezielle Bedeutung, da diese die größten Mengen von wasserlöslichen Stoffen enthalten, hingegen enthalten die Schlacken wasserlösliche Substanzen in einem wesentlich geringeren Anteil. Verursacht und begünstigt wird diese hohe Wasserlöslichkeit sowohl durch die große innere Oberfläche der Flugaschen als auch durch das Vorhandensein von leicht löslichen Metallverbindungen.

Als wichtigster Einsatzbereich für die Verwertung von Müllschlacken wird derzeit der Straßenbau angesehen. Diesbezüglich wurden in der Schweiz umfangreiche Untersuchungen durchgeführt. Dabei wurde festgestellt, daß sich eine gut ausgebrannte Müllschlacke nach einer entsprechenden Aufbereitung sehr gut als Material für Fundierungsschichten eignet. Solche Tragschichten sind bezüglich Tragfähigkeit und sonstiger Eigenschaften einem Kies guter Qualität durchaus gleichzusetzen.

Ein ähnliches Problem bildet die Verwertung von Rückständen aus Kraftwerksanlagen. Aufgrund der weltweit bestehenden Probleme mit der Versorgung von Erdöl, hat in den letzten Jahren die Verwendung von Kohle für die Energieversorgung in vielen Ländern wieder an Bedeutung gewonnen. Es kann davon ausgegangen werden, daß der Einsatz von Kohle in den nächsten Jahren, sowohl zur Erzeugung von Strom als auch in der industriellen Verwendung noch deutlich zunehmen wird. Verbunden mit der steigenden Verwendung von Kohle ist auch eine Zunahme der anfallenden Verbrennungsrückstände und damit die dringende Notwendigkeit zu deren Beseitigung bzw. Wiederverwendung. Von der stofflichen Zusammensetzung her und aufgrund ihrer physikalischen, chemischen und mineralogischen Eigenschaften ist es naheliegend, diese Rückstände nicht als Abfallstoffe, sondern als ein fast zur Gänze gut verwertbares Nebenprodukt zu betrachten.

Müllschlacken sind hinsichtlich Zusammensetzung, Größe und Form extrem heterogene Produkte. Da die Schlacke aus der Müllverbrennung nur wenig auslaugbar ist, in der Regel eine günstige Kornverteilung aufweist und sich meist gut verdichten läßt, wird sie in Holland, in Norddeutschland und in der Schweiz zunehmend für die Herstellung von Tragschichten im Straßenbau und für die Errichtung von Lärmschutzwällen verwendet. Es ist aber nicht zulässig für solche Zwecke Gemische aus Schlacke und Flugasche zu verwenden. Diese Mischungen weisen nämlich unter Umständen eine beträchtliche Konzentration an löslichen Salzen auf. Eine Lagerung der Schlacke kann dann als völlig unbedenklich angesehen werden, wenn eine Trennung von der Flugasche erfolgt. Da für die Ablagerung von Flugaschen bzw. von Gemischen aus Flugasche und Müllschlacke besondere Vorsichtsmaßnahmen notwendig sind, bestehen derzeit Bestrebungen,durch entsprechende Behandlungen diese Rückstände zu verfestigen und mit dem Ziel die vorhandenen Schadstoffe zielsicher und wirkungsvoll einzubinden.

Derzeit werden vorwiegend Aschen aus der Steinkohlenverbrennung einer weiteren Verwertung zugeführt. Braunkohlenaschen fallen zwar in großen Mengen an, sie werden in der Hauptsache aber auf Deponien gelagert oder zur Verfüllung von ausgekohlten Bergwerken verwendet.

Aufgrund ihrer puzzolanischen Eigenschaften wird die Steinkohlenflugasche in der Hauptsache als Betonzusatzstoff verwendet.

Weiters wird die Flugasche im Straßenbau zur Verbesserung des Untergrunds, für Dammschüttungen und in Tragschichten eingesetzt. Für bituminöse Tragschichten, Binderschichten und Deckschichten lassen sich Flugaschen auch als Füller verwenden.

Die Aufgabe der vorliegenden Erfindung war es daher, ein Baustoffgemisch und ein Verfahren zu dessen Herstellung zu entwickeln, bei welchem die angeführten Schlacken und Aschen, aber auch andere bislang als Abfallstoffe bewertete Materialien, wie beispielsweise Beton- oder Ziegelschutt, Abfälle aus der Beton- und Ziegelherstellung u. dgl. als einer der Ausgangsstoffe Verwendung finden. Dabei ist eine den Baustoffnormen entsprechende Festigkeit zu erreichen und die vorhandenen Schadstoffe müssen sicher und nicht auslaugbar im fertigen Produkt eingeschlossen sein. Weiters soll der Herstellungsaufwand, sei es an Zuschlagstoffen oder an Energieeinsatz, soweit als möglich verringert werden.

Zur Lösung dieser Aufgabe ist das Baustoffgemisch der eingangs genannten Art erfindungsgemäß dadurch gekennzeichnet, daß die Grundrohstoffkomponente aus tribomechanisch aktivierten Haus- und/oder Industrieabfallstoffen besteht, insbesondere aus Schlacken und Aschen aus der Müllverbrennung oder Kraftwerken, aus Ziegel- und /oder Betonschutt bzw. Abfällen der Ziegel- und/oder Betonherstellung, etc., und daß das Gewichtsverhältnis Mischung zu Wasser gleich 1 zu 0,05 bis 0,25, vorzugsweise 0,08 bis 0,16, ist.

Der Ausdruck "Mischung" soll hier und in weiterer Folge die vermischten und im wesentlichen trockenen Komponenten des Baustoffgemisches bezeichnen, d.h. die Grundrohstoffkomponente und das Bindemittel.

Das Verfahren zur Herstellung von derartigen Baustoffgemischen ist erfindungsgemäß dadurch gekennzeichnet, daß zwischen 85 und 100, vorzugsweise zwischen 90,6 und 95,4 Gew.-% einer Grundrohstoffkomponente bestehend aus Haus- und/oder Industrieabfallstoffen, insbesondere aus Schlacken und Aschen aus der Müllverbrennung oder Kraftwerken, aus Ziegel- und/oder Betonschutt bzw. Abfällen der Ziegel- und/oder Betonherstellung etc.,tribomechanisch aktiviert, danach allenfalls mit 0 bis 15, vorzugsweise 4,6 bis 9,4 Gew.-% eines Bindemittels, vorzugsweise gelöschtem oder ungelöschtem Kalk, und diese Mischung anschließend mit Wasser gemischt, zu den gewünschten Formen verpreßt und hydrothermal ausgehärtet wird.

Gemäß einem weiteren Merkmal wird das Anmachwasser in einem Gewichtsverhältnis Mischung zu Wasser wie 1 zu 0,05 bis 0,25, vorzugsweise 0,08 bis 0,16 zugegeben.

Auf diese Art und Weise hergestellte Baustoffe entsprechen mit ihren Eigenschaften allen Qualitätsbedingungen der DIN- und Ö-Norm. Diese Baustoffe eignen sich für den Bau von Wohn-, Industrie- und Sozialobjekten.

Dieses Verfahren ist auch bei der Herstellung von Bauelementen mit und ohne Hohlräumen und mit diversen Ausmaßen anwendbar.

Der Materialanteil in der Struktur der Baukosten liegt bedeutend niedriger als im Falle der Verwendung von Baustoffen, die nach klassischen technologischen Methoden hergestellt wurden. So ist z.B. im Vergleich zum Bauziegel die für die Herstellung von 1m² Wand erforderliche Energie durchschnittlich 3,5 mal geringer, für 1m³ Ziegel durchschnittlich 10-15 mal geringer. Dies ist gleichfalls in ökologischer Hinsicht von Bedeutung.

Demnach zeichnen sich die als optimal ermittelten Baustoffe durch optimale Wärmedämm- und andere Kennzahlen aus. Die Anwendungsmöglichkeiten für diese Baustoffe sind unbegrenzt, sodaß sie in allen Klimazonen verwendet werden können.

Durch den Einsatz der analysierten Baustoffe für die Errichtung von Gebäuden kann man gewisse Reduktionen der Konstruktionsgewichte erzielen, was sich wieder wirtschaftlich günstig auswirkt, insbesondere durch die Reduktion der Abmessungen tragender Konstruktionsteile (Fundamente, Säulen, Geschoßdecken usw.). Auch die benötigte Menge an Bindemittel kann im erfindungsgemäßen Verfahren verringert werden, was ebenfalls eine erhebliche Ersparnis bei der Produktion bringt.

Beispielsweise kann bei Verwendung von Beton- oder Ziegelschutt, wie sie etwa beim Abriß von Gebäuden anfallen, auf eine Kalkbeigabe völlig verzichtet werden, da das Bindemitel in diesem Fall bereits in der Grundrohstoffkomponente vorhanden ist, beispielsweise als Mörtel. Dieser Umstand bringt weitere Einsparungen bezüglich der Materialkosten mit sich.

Weitere Merkmale und Vorteile der Erfindung werden in der nachfolgenden Beschreibung näher erläutert.

Unter dem Begriff der Tribomechanik versteht man mikroskopische und submikroskopische Vorgänge, die beim Eingriff in das Gefüge von Grenzflächen kristalliner Körper ablaufen. Die von der Tribophysik erfaßten Zusammenhänge von mechanischen Wechselwirkungen und physikalischen Erscheinungen zwischen festen Phasengrenzflächen untereinander oder mit ihrer Umgebung sind sehr verschiedenartig und die energetischen Ursachen noch nicht völlig geklärt. Solche Wechselwirkungen ergeben sich z.B. bei der Behandlung von Stoffen in Desintegratoren, Schwingmühlen oder Kugelmühlen.

Eine wichtige Ursache für die Änderung des Stoffverhaltens bei tribomechanischen Beanspruchungen beruht auf der Veränderung der Gitterstruktur der Festkörper. Da diese in erster Linie in der Erzeugung von fehlgeordneten Bereichen bestehen, führt die tribomechanische Behandlung praktisch immer zu einer Beschleunigung der am Festkörper ablaufenden physikalisch- chemischen Prozesse, d.h. zu einer Aktivierung des Festkörpers. Der Aktivierungsgrad hängt sowohl von der Struktur des tribomechanisch bearbeiteten Festkörpers als auch von der Intensität und der Art der auf ihn einwirkenden mechanischen Kräfte ab. Im Falle von periodisch wirkenden Kräften wird die Intensität der Bearbeitung von der Amplitude und der Frequenz der einwirkenden Energie bestimmt. So erreicht z.B. in Schwingmühlen, die Konzentration der Gitterdefekte im Laufe der Bearbeitung des Festkörpers ein Maximum.

Die große bautechnische Bedeutung von tribomechanischen Verfahren konnte bereits bei der Aktivierung von Zementen in Desintegratoren nachgewiesen werden. Dabei ließ sich die Festigkeit des aus aktivierten Zementen hergestellten Betons um etwa auf das Doppelte steigern. Gleichzeitig zeigten diese Betone auch eine hohe Frühfestigkeit, d.h. der Härtungsprozeß läuft bedeutend schneller ab als bei der Verwendung von normalem, nicht aktivierten Zement. Ähnlich gute Ergebnisse zeigten sich bei der Herstellung von Kalksandsteinen (AT-PS 295 381; Hint). Eine Aktivierung des Quarzsandes erbrachte bei den fertigen Steinen wesentlich höhere Festigkeiten als die aus unbehandeltem Quarzsand hergestellten Steine, wobei die Praxis ergeben hat, daß man mit einem im Desintegrator gemahlenen Sand, Bausteine mit einer höheren Druckfestigkeit erhält als aus dem in Kugel- oder Schwingmühlen gemahlenen Material.

Ein Desintegrator stellt eine Art Stiftmühle dar, in der sich zwei gegenüberstehende und mit mehreren Stiftkränzen versehene Rotoren mit hoher Drehzahl gegenläufig drehen. Die Hauptteile des Desintegrators sind Körbe. Sie stellen einen Satz von Stäben bzw. Schlagkörpern dar, welche in drei konzentrischen Kreisen angeordnet sind. Die Stäbe sind mit einer Reihe von Scheiben befestigt. Einige von ihnen sind mit einem Gewinde ausgestattet, der Großteil aber ist eingelegt. Beide Körbe, der äußere und der innere, werden ineinander geschoben und setzen sich mit einer Geschwindigkeit von bis zu 1500 Umdr./Minute jeweils in entgegengesetzter Richtung in Bewegung. Bei einem Korbdurchmesser von etwa 900mm entspricht dies einer Geschwindigkeit der Schlagkörper von mindestens 15m/s und Relativgeschwindigkeit der Stäbe gegeneinander von bis zu 120m/s. Bei derartig hohen Geschwindigkeiten wird das ins Korbinnere gelangende Sandmaterial heftigen und häufigen Schlägen ausgesetzt, welche die Körner zerkleinern und aktivieren. Der Innenkorb wird durch einen Motor mit etwa 1500 Umdr./Min. bewegt. In der Regel besitzt der Außenkorb für die Grob- und Feinmahlung zwei Rotationsstufen in der Größe von 1000 und 1500 Umdr./Min.

Die zu aktivierenden Teilchen werden beim Durchgang durch den Desintegrator in Bruchteilen einer Sekunde durch die auf den Rotoren angeordneten Stifte wiederholten Beschleunigungs- und Bremseinwirkungen ausgesetzt. Die in dieser kurzen Zeit auf die zu aktivierenden Teilchen übertragene mechanische Energie ist größer als bei einer länger andauernden Bearbeitung in einer Kugel- oder Schwingmühle.

So erreicht beispielsweise die Konzentration der Gitterdefekte bei Schwingmühlen irgendwann im Laufe der Bearbeitung einen Höchstwert.

Eine Erhöhung der Bearbeitungsintensität bekommt man bei Schwingmühlen durch eine Vergrößerung der Bearbeitungsamplituden und der Schwingungsfrequenz und bei Kugelmühlen durch eine Vergrößerung der Kugelmassen.

Im Desintegrator werden die einzelnen Teilchen mit hoher Geschwindigkeit gegen harte Flächen geschleudert und werden dabei starken Stößen ausgesetzt. Beim praktischen Desintegrierungsvorgang erhalten die einzelnen Teilchen unabhängig von ihrer Art mindestens 3 bis 8 Stöße. Der Zeitraum zwischen den einzelnen Schlägen ist vorzugsweise kleiner als 0,01s, maximal 0,05s. Infolgedessen werden die Körner hauptsächlich aufgrund von Defekten der inneren Struktur zerkleinert und das gemahlene Material erhält eine größere Strukturfestigkeit als der Ausgangsstoff.

Die erhöhte Festigkeit der fertigen Produkte läßt sich auch durch die Vergrößerung der Löslichkeit der Körner, durch die Bildung einer großen Menge von Hydrosilikatbindemitteln während der Hydrothermalbehandlung, durch die optimale Kornstruktur und mit großer Wahrscheinlichkeit auch durch den Zustand der Oberflächenstruktur der Körner erklären, wenn bei einem bestimmten Aktivierungsgrad die Teilchen sich in einem Grenz-Deformations-Spannnungszustand befinden, als dessen Ergebnis eine Erhöhung der chemischen Reaktionsfähigkeit stattfindet. Vom elektrostatischen Gesichtspunkt aus kann das Anwachsen der Festigkeit auch durch eine Vergrößerung der Ladung des aktivierten Materials erklärt werden. Durch den Aktivierungsvorgang bekommen die Körner eine höhere negative Ladung, wodurch sich bei der Mörtelherstellung ein besserer Verbund mit den positiv geladenen Kalkteilchen ergibt. Beim Anmachen des Gemisches mit Wasser und im Zuge der Verpressung und Aushärtung vergrößern sich neben den elektrostatischen Kräften auch die molekularen Anziehungskräfte und es entsteht ein gleichmäßiges Lösungsfeld, das im weiteren die schnelle Bildung

von Kristallisationszentren gefördert.

Die Grundrohstoffkomponente für das Baustoffgemisch wird in einen Desintegrator eingebracht und darin wie oben beschrieben aktiviert. Im Falle zu großer Teilchengrößen des Ausgangsmaterials, wie insbesondere oftmals bei Beton- oder Ziegelschutt vorkommt, werden die Partikel der Grundrohstoffkomponente vor der Aktivierung mittels herkömmlichen mechanischen Einrichtungen wie Brecher, Hammermühlen od.dgl. auf eine Korngröße von maximal 4mm vermahlen. Anschließend an die Aktivierung wird die Grundrohstoffkomponente mit einer Bindemittelkomponente, allenfalls mit weiteren Stoffen, wie beispielsweise Aluminium als Porenbildner od.dgl. vermischt. In dieser trockenen Mischung variiert der Anteil der Grundrohstoffkomponente vorzugsweise zwischen 90,6 und 95,4 Gew.-%. Gegebenenfalls muß vielleicht die untere Grenze dieser Komponente bis zu 85 Gew.-% abgesenkt werden. Anderseits kann in günstigen Fällen, d.h. bei Vorhandensein eines Bindemittels in der Grundrohstoffkomponente, bis zu 100 Gew.-% des letzteren verwendet werden. Dementsprechend variiert daher der Anteil der Bindemittelkomponente zwischen 15 und 0 Gew.-%, wird aber vorzugsweise zwischen 4,6 und 9,4 Gew.-% liegen.

Die Mehrzahl der Verfahren zur Verfestigung von Rückständen aus Müllverbrennungsanlagen und Kraftwerksfeuerungen verwenden in den meisten Fällen folgende Stoffe als Bindemitel: Zement, Wasserglas, Puzzolan, Kalk oder Gips. Die auf diesen Bindemitteln beruhenden Verfestigungsmethoden führen zur Entstehung eines Gerüstes von Silikaten oder Aluminaten, die mit den anorganischen Komponenten der Abfallstoffe chemische Bindungen eingehen und damit das Material nicht nur verfestigen sondern auch allfällig vorhandene gefährliche Substanzen wirkungsvoll einschließen. Dabei erfolgt die chemische Bindung vorwiegend durch eine Reaktion der negativ geladenen Silikat- oder Aluminatoberflächen mit den in gelöster Form vorhandenen positiv geladenen Metallionen. Praktische Versuche haben ergeben, daß die besten besten Resultate, auch in Hinblick auf den Energieaufwand mit gelöschtem oder ungelöschtem Kalk erzielt werden.

Ein seit langem bekanntes Verfahren ist die chemische Stabilisierung von Böden mittels Kalziumoxid (gebrannter Kalk) oder Kalziumhydroxid. In den meisten Böden sind größere Mengen an Kieselsäure oder kolloidalen Alumosilikaten enthalten. Bei der Vermischung dieser Böden mit Kalk, kommt es auch hier zu puzzolanischen Reaktionen unter Ausbildung von Kalziumsilikaten und Kalziumaluminaten, die eine bindende und festigende Wirkung haben. Das zum Einsatz kommende Kalziumoxid reagiert mit Wasser unter einer Oberflächenvergrößerung in der Form, daß nicht flüchtige Schadstoffe in das sich bildende feste Kalkhydrat eingeschlossen werden. Die Reaktion besitzt den Nachteil, daß sie unter Wärmeentwicklung abläuft, wodurch allenfalls leicht flüchtige Bestandteile freigesetzt werden. Das entstehende Kalziumhydroxid hat auch eine relativ hohe Wasserlöslichkeit und ist kein stabiles Endprodukt. Eine Aushärtung ist nur durch Reaktion mit dem Kohlendioxidgehalt in der Luft möglich. Bei solchen Vorgängen bildet sich dann das stabilere Kalziumkarbonat:

$$Ca(OH)_2 + CO_2 = CaCO_3 + H_2O$$

Diese Reaktion läßt sich durch eine Begasung mit einem kohlendioxidhältigen Gas erheblich beschleunigen. Auf der Grundlage der Verfestigung mit Kalk beruht auch die Herstellung von Kalk-Sandsteinen (AT-PS 295 381; Hint).

Das für die beschriebenen Vorgänge nötige Wasser, welches auch für die Fließfähigkeit der Mischung sorgt, wird der trockenen Mischung in einem Gewichtsverhältnis Mischung:Wasser gleich 1 : 0,05 bis 0,25 zugegeben, worauf alle Komponenten gründlich vermengt und durchmischt werden. Das günstigste Mischungsverhältnis, durch Versuche ermittelt, liegt bei 1 : 0,08 bis 0,16. Anschließend wird die feuchte Mischung zu beliebigen Bauteilen, Formkörpern oder ähnlichem, solide oder mit Hohlräumen verpreßt. Der zur Anwendung gelangende Verpreßdruck variiert in Abhängigkeit von den Ausgangsstoffen und deren Mischungsverhältnis in sehr weiten Grenzen. So kann bei der Grundrohstoffkomponente Tonabbrand im Zuge der Herstellung von Isolationsstoffen lediglich ein Druck von 3 MPa nötig sein, bei Baustoffen aus Elektrofilterasche zwischen 26 und 54 MPa, bis zu 160 MPa bei Ab fällen aus der Ziegel-und Dachziegelproduktion.

Als letzter Schritt ist schließlich die hydrothermale Aushärtung der Formteile vorgesehen, wobei es durch Auskristallisieren zur Erhärtung der Mischung kommt. Die Temperatur liegt dabei zwischen 55 und 90°C und die Dauer der Aushärtung beträgt etwa 3,5 bis 7,5 Stunden. Die hydrothermale Aushärtung kann jedoch auch bei Temperaturen von über 100°C bei Dampfüberdruck erfolgen, beispielsweise in einem Autoklaven, vorzugsweise zum Zeitgewinn einem Durchgangsautoklaven mit gleichzeitiger Beschickung und Entleerung. Hier liegt die Temperatur vorzugsweise zwischen 170 und 180°C und die Behandlungsdauer beträgt etwa 3 bis 7 Stunden.

Die Härtung der Produkte darf bei der Variante mit Dampfüberdruck nur mit gesättigtem Dampf durchgeführt werden. Ein überhitzter Dampf wäre schädlich, da er dem Gemisch die für die chemische Reaktion erforderliche Anmachfeuchtigkeit entziehen würde. Die Behandlung erfolgt vorzugsweise in druckfesten, stählernen Kammern mit rundem oder rechteckigem Querschnitt und einer Länge bis zu 40m. Bei der industriellen Fertigung erfolgt die Beschickung der Autoklaven meist über Schienen. Um die Autoklaven möglichst hoch auszulasten, in der Silikatbetonherstellung ist der Autoklav das technologisch bestimmende Aggregat, verwendet man Druckbehälter, die von beiden Seiten zu öffnen sind. Bei diesen sogenannten Durchgangsautoklaven werden die zur Härtung vorbereiteten Formen auf der einen Seite in den geöffneten Autoklaven hineingeschoben, gleichzeitig werden die erhärteten Produkte am anderen Ende herausgeführt. Die Beschickung und Entleerung dauert beim Durchgangsautoklaven etwa nur halb so lang wie bei den einseitig zu öffnenden Behältern.

Abschließend sollen anhand einiger Beispiele einige bereits auf ihre Eignung als Ausgangsmaterial zur Baustoffherstellung mittels des erfindungsgemäßen Verfahrens untersuchte Stoffe vorgestellt werden. Es sind dies:

- Betonschutt
- Asche aus Elektrofiltern
- Abraum aus der Magnesitseparation
- Tonabbrand
- Abfälle aus der Ziegel- und Keramikherstellung
- Schlacke aus Kohlenverbrennung

Es sollen in einer Kurzfassung, soweit ermittelt, chemische und physisch-mechanische Eigenschaften dieser Materialien, als auch die Eigenschaften der aus diesen Rohstoffen hergestellten Baustoffen dargestellt werden. Dabei wird die Auswahl entsprechender technologischer Parameter (Preßdruck, Kalkgehalt, Temperatur der Aushärtung und Dauer der Aushärtung) von Fall zu Fall durch ihre Variierung genau untersucht.

Beispiel 1:

Eine Mischung von 90,6 - 95,4% aktivierten Betonschutts und 4,6 - 9,4% Hydratkalkes wird homogenisiert und dann wird der Mischung das Wasser beigemengt und zwar im Verhältnis Gemisch: Wasser = 1:0,08 - 0,12.

Die fertige Mischung wird durch Verpreßung verformt und dann hydrothermal ausgehärtet:
- Preßdruck                    40 - 90 MPa
- Aushärtungstemperatur        90° und 170°C
- Aushärtungsdauer             4,5 - 7 Stunden

Für die Herstellung von Hohlblocksteinen mit einem Ausmaß von 32,0 x 28,0 x 24,0cm wurden verwendet:
19.872 kg aktivierter Betonschutt
2,062 kg Hydratkalk
1,755 kg Wasser

Andere technologische Parameter:
- Preßdruck                    40 MPa
- Aushärtungstemperatur        90°C
- Aushärtungsdauer             6 Stunden

Der so hergestellte Hohlblock hat folgende bauphysikalische Eigenschaften:
- Druckfestigkeit
a) nach einem Tag     25,6 MPa
b) nach 28 Tagen      29,3 MPa
- Volumenmasse        1.020 kg/m$^3$
- Wasseraufnahme      15,2 %

Beispiel 2:

Für die Herstellung von Hohlblocksteinen mit einem Ausmaß von 32,0 x 28,0 x 24,0cm wurden folgende Komponenten verwendet:
20.925 kg aktivierten Betonschutts
1,009 kg Hydratkalk
1,755 kg Wasser

Andere technologische Parameter:
- Preßdruck                    75 MPa
- Aushärtungstemperatur        90°C
- Aushärtungsdauer             6 Stunden

Der so hergestellte Hohlblock hat folgende bauphysikalische Eigenschaften:
- Druckfestigkeit
a) nach einem Tag     23,2 MPa
b) nach 28 Tagen      28,6 MPa
- Volumenmasse        1.020 kg/m$^3$
- Wasseraufnahme      14,92 %

Beispiel 3:

Für die Herstellung von Nf-Ziegeln mit einem Ausmaß von 25,0 x 12,0 x 6,5 cm wurden folgende Komponenten verwendet:

3,779 kg aktivierter Betonschutt

0,199 kg Hydratkalk

0,400 kg Wasser

    Andere technologische Parameter:

- Preßdruck                   90 MPa

- Aushärtungstemperatur     90°C

- Aushärtungsdauer          7 Stunden

    Der so hergestellte Hohlblock hat folgende bauphysikalische Eigenschaften:

- Druckfestigkeit

a) nach einem Tag       20,6 MPa

b) nach 28 Tagen       28,2 MPa

- Volumenmasse       2040 kg/m$^3$

- Wasseraufnahme     15,80 %

    Nachdem in den vorangegangenen Beispielen die einfache hydrothermale Aushärtung der Formteile erfolgte, soll in den folgenden Beispielen die Aushärtung mittels Autoklavierung beschrieben werden:

Beispiel 4:

    Für die Herstellung von Hohlblocksteinen mit einem Ausmaß von 32,0 x 28,0 x 24,0 cm wurden folgende Komponenten nach der vorher bestimmten Rezeptur (Beispiele 1 bis 3) verwendet:

19,872 kg aktivierter Betonschutt

2,062 kg Hydratkalk

1,755 kg Wasser

    Andere technologische Parameter:

```
     - Preßdruck                        40 MPa

     - Aushärtungstemperatur (Autoklav) 170°C

     - Aushärtungsdauer                  6 Stunden
```

    Der so hergestellte Hohlblock hat folgende bauphysikalische Eigenschaften:

- Druckfestigkeit

a) nach einem Tag       30,1 MPa

b) nach 28 Tagen       32,0 MPa

- Volumenmasse       1025 kg/m$^3$

- Wasseraufnahme     14,3 %

Beispiel 5:

    Für die Herstellung von Hohlblocksteinen mit einem Ausmaß von 32,0 x 28,0 x 24,0 cm wurden folgende Komponenten nach der vorher bestimmten Rezeptur verwendet:

20,925 kg aktivierter Betonschutt

1,009 kg Hydratkalk

1,755 kg Wasser

    Andere technologische Parameter:

```
     - Preßdruck                        75 MPa

     - Aushärtungstemperatur (Autoklav)  170°C

     - Aushärtungsdauer                   6 Stunden
```

    Der so hergestellte Hohlblock hat folgende bauphysikalische Eigenschaften:

- Druckfestigkeit

a) nach einem Tag    22,3 MPa
b) nach 28 Tagen    24,2 MPa
- Volumenmasse    1030 kg/m³
- Wasseraufnahme    14,2 %

Beispiel 6:

Für die Herstellung von Nf-Ziegeln mit einem Ausmaß von 25,0 x 12,0 x 6,5 cm wurden folgende Komponenten verwendet:

3,779 kg aktivierter Betonschutt
0,199 kg Hydratkalk
0,400 kg Wasser

Andere technologische Parameter:

| | |
|---|---|
| – Preßdruck | 90 MPa |
| – Aushärtungstemperatur (Autoklav) | 170°C |
| – Aushärtungsdauer | 7 Stunden |

Der so hergestellte Hohlblock hat folgende bauphysikalische Eigenschaften:
- Druckfestigkeit
a) nach einem Tag    36,2 MPa
b) nach 28 Tagen    38,4 MPa
- Volumenmasse    2040 kg/m³
- Wasseraufnahme    14,50 %

Die physisch-mechanischen Eigenschaften der erfindungsgemäß hergestellten Baustoffe sind von der tribomechanischen Aktivierung des Betonschutts sowie von den ausgewählten technologischen Parametern abhängig.

Beispiel 7:

Asche aus Elektrofiltern

Für diese Untersuchungen wurde eine Elektrofilterasche mit folgenden chemischen und physisch-mechanischen Eigenschaften gewählt.

|  | % |
| --- | --- |
| $SiO_2$ | 57,60 |
| $Al_2O_3$ | 16,87 |
| $Fe_2O_3$ | 6,30 |
| CaO | 5,47 |
| MgO | 1,70 |
| $Na_2O$ | 0,32 |
| $K_2O$ | 1,28 |
| $P_2O5$ | 0,06 |
| MgO | 0,08 |
| $TiO_2$ | 1,28 |
| BaO | 0,48 |
| Sulfate $SO_3$ | 0,99 |
| Sulfide $So_3$ | 0,00 |
| Glühverlust | 6,50 |
| Feuchtigkeit | 0,96 |

Physisch-mechanische Eigenschaften

| | |
| --- | --- |
| - Volumenmasse ohne Poren und Hohlraum, $g/m^3$ | 2,19 |
| - Volumenmasse, $kg/m^3$ | |
| a) Schuttmasse | 467 |
| b) Verdichtet | 829 |
| - Spezifische Oberfläche $cm^2/g$ | 2831 |
| - Granulometrie - Siebreste % | |
| - 0,063 mm | 20 |
| - 0,080 mm | 10 |
| - 0,090 mm | 8 |
| - 0,125 mm | 2 |
| - 0,250 mm | 1 |
| - 0,500 mm | 0 |

9

EP 0 470 948 A2

Für die folgenden Untersuchungen wurde als Herstellungsart die hydrothermale Aushärtungsmethode gewählt. Außer dieser Methode wurden auch folgende technologische Parameter variiert:

```
- Preßdruck bei Verformung              26 - 54 MPa

- Massengehalt des Hydratkalks          2,2 - 7,8 %

- Temperatur hydrothermaler Aushärtung  56 - 84°C

- Dauer hydrothermaler Aushärtung       276 - 444 Min.
```

Mit der Kombination o.a. technologischer Parameter zeigte es sich als möglich, die Herstellung der Baustoffe mit folgenden Eigenschaften zu bestimmen:
- Druckfestigkeit nach 1 Tag        2,3 - 10,0 MPa
- Druckfestigkeit nach 28 Tagen     3,3 - 10,5 MPa
- Volumenmasse bei vollem Block     1500 kg/m$^3$
- Volumenmasse bei Hohlblock        750 kg/m$^3$
- Wasseraufnahme                    24 - 29 %
- Wärmeleitzahl                     $\lambda$ = 0,22 W/mK

Die Baustoffe, die mit den o.a. physisch-mechanischen Eigenschaften hergestellt wurden, können für den Bau der Objekte, bei welchen die Wände verkleidet werden, als Ziegeln oder Blöcke gebraucht werden. Die Ersparnisse sind bei der Baustoffherstellung auf diese Art beträchtlich, denn der Energieaufwand ist im Vergleich mit der konventionellen Ziegelherstellung um 15,2 mal geringer.

Beispiel 8:

Abraum aus der Magnesitseparation

Der Abraum aus der Magnesitseparation stellt durch die anfallenden Mengen ein immer größer werdendes ökologisches Problem in vielen Ländern dar. Bisherige Prüfungen der Möglichkeit, dieses Material als Zusatz bei der Baustoffherstellung zu verwenden, haben keine positiven Ergebnisse gebracht. Mittels tribomechanischer Aktivierung wird die Struktur dieses Materials geändert und seine Eigenschaften den Ansprüchen der Baustofferzeugung angepaßt. Vor der Aktivierung wurde der Abraum auf eine Korngröße von 0 - 4 mm vorzerkleinert.

Chemische Analyse des Abraumes aus der Magnesitseparation

|  | % |
|---|---|
| $SiO_2$ | 27,51 |
| $Al_2O_3$ | 1,12 |
| $Fe_2O_3$ | 4,84 |
| CaO | 1,37 |
| MgO | 37,79 |
| Sulfate $SO_3$ | 0,04 |
| Sulfide $SO_3$ | 0,10 |
| $K_2O$ | 0,01 |
| $Na_2O$ | 0,07 |
| Glühverlust | 26,25 |
| Feuchtigkeit | 1,02 |
| __Gesamt (%):__ | __100,12__ |

Physisch-mechanische Eigenschaften des aktivierten Abraumes aus der Magnesitseparation

| | |
|---|---|
| -Volumenmasse ohne Poren und Hohlraum, $g/cm^3$ | 2,66 |
| - Volumenmasse, $kg/m^3$ | |
| a) Schuttmasse | 879 |
| b) Verdichtet | 1235 |
| - Spezifische Oberfläche, $cm^2/g$ | 1610 |
| - Granulometrie - Siebreste: | |
| - 0,063 mm | 98 % |
| - 0,080 mm | 86 % |
| - 0,090 mm | 72 % |
| - 0,125 mm | 62 % |
| - 0,250 mm | 44 % |
| - 0,500 mm | 33 % |
| - 0,710 mm | 24 % |
| - 1,000 mm | 16 % |
| - 2,000 mm | 3 % |

Es wurden folgende technologische Parameter und ihr Einfluß auf die Eigenschaften des hergestellten Baustoffes untersucht:

```
- Preßdruck bei Verformung              40 - 110 MPa

- Massengehalt des Hydratkalks          4,6 - 7,4 %

- Temperatur hydrothermaler Aushärtung  68 - 82°C

- Dauer hydrothermaler Aushärtung       215 - 385 Min.
```

Mit der Kombination entsprechender technologischer Parameter wurde festgestellt, daß viele Möglichkeiten für die Baustoffherstellung aus diesem Material gegeben sind.

Die Bauobjekte aus diesem Baustoff sollen durch Mörtel oder durch eine andere Wandverkleidung fertiggestellt werden.

Die Baustoffe aus dem untersuchten Abraum zeichnen sich mit folgenden physisch-mechanischen Eigenschaften aus:

- Druckfestigkeit nach 1 Tag     8,3 - 18,7 MPa
- Druckfestigkeit nach 28 Tagen   11,0 - 24,8 MPa
- Volumenmasse bei vollem Block   2030 kg/m$^3$
- Volumenmasse bei Hohlblock      1020 kg/m$^3$
- Wasseraufnahme                  15,1 18,7 %
- Wärmeleitzahl                   $\lambda = 0,250$

Der Energieaufwand benötigt für die Baustoffherstellung aus dem tribomechanisch aktiviertem Abraum aus der Magnesitseparation ist 13,33 mal geringer als der Energieaufwand bei der Baustoffherstellung konventioneller Art.

Beispiel 9:

Abfälle aus der Produktion von Ziegeln und der Baukeramik Für diese Untersuchungen wurden diverse Muster der Materialien genommen, solche die bei der Ziegelherstellung als Bruchmaterial abfallen, aber auch solche, die beim Abriß alter Gebäude als Bauschutt vorkommen. Die Lagerung dieser Abfälle, besonders in großen, urbanischen Gebieten ist problematisch und die Möglichkeiten für die Anwendung oder Regelung sind ziemlich eingeschränkt.

Die tribomechanische Aktivierung macht die Wiederverwertung dieser Stoffe durch ihre Verwendung bei der Baustoffherstellung möglich.

Die Abfälle wurden vor der Aktivierung auf eine Korngröße von 0 - 4 mm vorzerkleinert. Die Eigenschaften der aktivierten Abfälle wurden wie folgt geprüft:

Chemische Zusammensetzung aktivierter Abfälle aus Ziegeln und Dachziegeln

|  | % |
|---|---|
| $SiO_2$ | 59,43 |
| $Al_2O_3$ | 22,47 |
| $TiO_2$ | 0,63 |
| $Fe_2O_3$ | 3,93 |
| FeO | 0,76 |
| MnO | 0,06 |
| MgO | 1,50 |
| CaO | 3,16 |
| $Na_2O$ | 0,25 |
| $K_2O$ | 1,43 |
| $P_2O5$ | Spuren |
| Sulfate $SO_3$ | 0,63 |
| Sulfide $SO_3$ | 0,13 |
| Glühverlust | 4,27 |
| Feuchtigkeitsgehalt | 1,30 |
| Gesamt (%): | 99,95 |

Physisch-mechanische Eigenschaften

- Volumenmasse, ohne Poren und Hohlraum, g/cm³  2,60
- Volumenmasse kg/m³

  a) Schuttmasse  520
  b) Verdichtet  748

- Spezifische Oberfläche, cm²/g  5430

- Granulometrie, Siebreste %

  - 0,063 mm  86
  - 0,080 mm  71
  - 0,090 mm  60
  - 0,125 mm  48
  - 0,250 mm  26
  - 0,500 mm  16
    0,710 mm  12

Folgende technologische Parameter wurden untersucht:

- Preßdruck bei Verformung  90 - 160 MPa
- Massengehalt des Hydratkalkes  3,6 - 6,4 %
- Temperatur hydrothermaler Aushärtung  56 - 84°C
- Dauer hydrothermaler Aushärtung  258 - 342 min.

Mit der Kombination technologischer Parameter wurden die Baustoffe mit folgenden Eigenschaften hergestellt:
- Druckfestigkeit nach 1 Tag  12,4 - 24,6 MPa
- Druckfestigkeit nach 28 Tagen  19,6 - 30,4 MPa
- Volumenmasse bei vollem Block  1720 kg/m³
- Wasseraufnahme  18,0 - 23,5 %
- Wärmeleitzahl  $\lambda = 0,225$ W/mK

So hergestellte Baustoffe können beim Bau von Objekten gebraucht werden, bei welchen die Wände mit Mörtel oder anderen Schutzmaterialien verkleidet werden.

Der Energieaufwand bei derartiger Baustoffherstellung ist 15 mal geringer als bei der Baustoffherstellung konventioneller Art.

Beispiel 10:

Schlacke

Gegenstand dieser Untersuchung ist die Schlacke, die als Rückstand der Verbrennung von Kohlenrückständen, in Fernheizwerken, Kesselbetrieben und Haushalten entsteht.

Der Abtransport und die Lagerung dieser Schlacke ist teuer und ökologisch gesehen, umweltbelastend.

Gelegentlich wird die Schlacke bei der Betonherstellung benutzt, für den sogenannten "Schlackbeton". So erzeugtes Material hat eine sehr hohe Volumenmasse und bedarf damit Veränderungen bei der statischen Planung.

Vor der Aktivierung wurde die Schlacke auf eine Korngröße von 0 - 4 mm vorzerkleinert. Die Pufferungen brachten folgende Ergebnisse:

Chemische Zusammensetzung aktivierter Schlacke

| | % |
|---|---|
| $SiO_2$ | 53,25 |
| $Al_2O_3$ | 16,20 |
| $TiO_2$ | 0,16 |
| $Fe_2O_3$ | 6,12 |
| $FeO$ | 0,10 |
| $MnO$ | 0,25 |
| $MgO$ | 4,66 |
| $CaO$ | 8,10 |
| $Na_2O$ | 2,14 |
| $K_2O$ | 2,10 |
| $P_2O5$ | 0,25 |
| Sulfate $SO_3$ | 0,45 |
| Sulfide $SO_3$ | 0,20 |
| Glühverlust | 3,74 |
| Feuchtigkeit | 2,40 |
| Gesamt (%): | 100,12 |

Physisch-mechanische Eigenschaften aktivierter Schlacke

| | |
|---|---|
| – Volumenmasse ohne Poren und Hohlraum, g/cm³ | 2,45 |
| – Volumenmasse, kg/m³ | |
| a) Schuttmasse | 530 |
| b) verdichtet | 690 |
| – Spezifische Oberfläche, cm²/g | 3420 |
| – Granulometrie – Siebreste, % | |
| – 0,063 mm | 83 |
| – 0,080 mm | 70 |
| – 0,090 mm | 58 |
| – 0,125 mm | 46 |
| – 0,250 mm | 28 |
| – 0,500 mm | 14 |
| – 0,710 mm | 6 |

Prüfung der Möglichkeiten für die Baustoffherstellung aus tribomechanisch aktivierter Schlacke Bei den Prüfungen dieses Materials wurden die Einflüsse folgender Parameter untersucht:

| | |
|---|---|
| – Preßdruck bei Verformung | 57 – 93 MPa |
| – Massengehalt des Hydratkalkes | 2,2 – 7,8 % |
| – Temperatur hydrothermaler Aushärtung | 56 – 84°C |
| – Dauer hydrothermaler Aushärtung | 276 – 444 min. |

Mit der Auswahl entsprechender Parameter wurden die Baustoffe mit folgenden Eigenschaften hergestellt:

| | |
|---|---|
| - Druckfestigkeit nach 1 Tag | 11,8 - 21,4 MPa |
| - Druckfestigkeit nach 28 Tagen | 19,2 - 24,8 MPa |
| - Volumenmasse bei vollem Blok | 1900 kg/m³ |
| - Volumenmasse bei Hohlblock | 1000 kg/m³ |
| - Wasseraufnahme | 18,2 - 23,4 % |
| - Wärmeleitzahl | $\lambda = 0,24$ W/mK |

Die Baustoffe mit diesen Eigenschaften sind für den Bau von Objekten geeignet, bei welchen die Wände mit einer Verkleidung geschützt werden.

Der Energieaufwand ist bei der Herstellung dieser Baustoffe um 14,2 mal geringer als bei der Herstellung von konventionellen Baustoffen.

Wie die nachfolgende Tabelle zeigt, ist die eingebaute Energie bei einer Wand aus tribomechanisch erzeugten Blöcken einige male geringer als bei klassischen Baustoffen. Alle Wände erfüllen die Bedingungen gemäß den Normvorschriften für die Wärmetechnik im Bauwesen. Die in 1m² Wandkonstruktion eingebaute Energie ist für alle drei Klimazonen gering, sodaß durch die Verwendung von tribomechanisch erzeugtem Baumaterial wesentliche Energie- bzw. Baukosteneinsparungen möglich wären.

Vergleichende Analyse der Außenwandkonstruktionen nach bauklimatischen Zonen betreffend eingebaute Energie:

| Beisp. Nr. | Beschreibung der Konstruktion | Klima- zone | Eingeb. Energie kW/m² | Index % |
|---|---|---|---|---|
| 1. | - Verl. Mörtel, 2,5 cm | I | 63,8 | 100 |
|  | - Baublock aus Abfall der Magnesitseparation, tribo-mechanisch erzeugt | II | 70,9 | 100 |
|  | - Kalkmörtel, 2 cm | III | 77,5 | 100 |
| 2. | - Wärmedämmputz, 4 cm | I | 86,6 | 136 |
|  | - Baublock aus Abfall der Magnesitseparation, tribo-mechanisch erzeugt | II | 92,2 | 130 |
|  | - Kalkmörtel, 2 cm | III | 99,4 | 128 |
| 3. | - "Jubizol" mit Polystyrol | I | 311,6 | 388 |
|  | - Bauziegel, 25 cm | II | 319,6 | 351 |
|  | - Kalkmörtel, 2 cm | III | 323,6 | 317 |
| 4. | - "Jubizol" mit Polystyrol | I | 283,6 | 344 |
|  | - Eisenbeton, 20 cm | II | 291,6 | 311 |
|  | - Kalkmörtel, 2 cm | III | 295,6 | 281 |
| 5. | - Verl. Mörtel, 2,5 cm | I | 107,0 | 168 |
|  | - Leichtbeton-Block, 20 cm | II | 119,5 | 169 |
|  | - Kalkmörtel, 2 cm | III | 132,0 | 170 |

Bei allen der bisher angegebenen Beispielen wurde als Bindemittelkomponente Hydratkalk verwendet. Dieser zeigte die besten Resultate. Gute Eigenschaften wiesen auch Dachziegel auf, die unter Verwendung von Portlandzement hergestellt wurden. Prinzipiell sind jedoch alle der genannten Bindemittel im erfindungsgemäßen Verfahren verwendbar.

Chemische Zusammensetzung des Hydratkalkes

| | % |
|---|---|
| Glühverlust bei 1000 °C | 23,10 |
| Feuchtigkeit bei 120 °C | 0,13 |
| Kristallwasser bei 600 °C | 20,79 |
| $CO_2$ | 2,20 |
| $SiO_2$ + unlösliche Reste | 0,14 |
| $Fe_2O_3$ | 0,14 |
| $Al_2O_3$ | 0,09 |
| CaO | 74,50 |
| MgO | 1,55 |
| $SO_3$ | 0,10 |
| $Na_2O$ | 0,29 |
| $K_2O$ | 0,05 |
| $P_2O5$ | 0,02 |
| MnO | 0,01 |
| $TiO_2$ | 0,02 |
| Gehalt von aktievem CaO + MgO | 94,35 |
| Insgesamt (%): | 100,03 |

**Patentansprüche**

1. Baustoffgemisch zur Herstellung von Form- und Fertigteilen, wie beispielsweise Ziegel, Platten, Träger, Rohre usw., bestehend aus einer Grundrohstoffkomponente mit einem Anteil von 85 bis 100, vorzugsweise 90,6 bis 95,4 Gew.-%, allenfalls einem Bindemittel, vorzugsweise gelöschtem oder ungelöschtem Kalk mit einem Anteil von 0 bis 15, vorzugsweise 4,6 bis 9,4 Gew.-%, sowie Wasser in einem Gewichtsverhältnis Grundrohstoffkomponente und Bindemittel zu Wasser gleich 1:0,05 bis 0,25, dadurch gekennzeichnet, daß die Grundrohstoffkomponente aus aktivierten Haus- und/oder Industrieabfallstoffen besteht, insbesondere aus Schlacken und Aschen aus der Müllverbrennung oder Kraftwerken, aus Ziegel- und/oder Betonschutt bzw. Abfällen der Ziegel- und/oder Betonherstellung, welche in an sich bekannter Weise tribomechanisch aktiviert sind.

2. Verfahren zur Herstellung von Baustoffgemischen nach Anspruch 1, insbesondere zur Herstellung von Formteilen, wie beispielsweise Ziegeln, Platten, Träger, Rohre usw., dadurch gekennzeichnet, daß zwischen 85 und 100, vorzugsweise zwischen 90,6 und 95,4 Gew.-% einer Grundrohstoffkomponente, bestehend aus Haus- und/oder Industrieabfallstoffen, insbesondere aus Schlacken und Aschen aus der Müllverbrennung oder Kraftwerken, aus Ziegel- und/oder Betonschutt bzw. Abfällen der Ziegel- und/oder Betonherstellung etc. tribomechanisch aktiviert, danach allenfalls mit 0 bis 15, vorzugsweise 4,6 bis 9,4 Gew.-% eines Bindemittels, vorzugsweise gelöschtem oder ungelöschtem Kalk, und diese Mischung mit Wasser gemischt, zu den gewünschten Formen verpreßt und hydrothermal ausgehärtet wird.

3. Verfahren nach Anspruch 2, dadurch gekennzeichnet, daß das Anmachwasser in einem Gewichtsverhältnis Mischung zu Wasser wie 1 zu 0,05 bis 0,25, vorzugsweise 0,08 bis 0,16 zugegeben wird.

4. Verfahren nach Anspruch 2, dadurch gekennzeichnet, daß die Partikel der Grundrohstoffkomponente mittels mechanischer Einrichtungen, beispielsweise Brecher oder Hammermühlen, auf eine Korngröße von maximal 4 mm vorzerkleinert werden.

5. Verfahren nach Anspruch 2, dadurch gekennzeichnet, daß jedes Partikel der Grundrohstoffkomponente im Laufe der tribomechanischen Aktivierung mindestens 3 Stößen von Schlagkörpern, welche mit mindestens 15 m/s bewegt werden, innerhalb von maximal 0,05 s ausgesetzt ist.

6. Verfahren nach Anspruch 2, dadurch gekennzeichnet, daß der Verpreßdruck zwischen 3 und 160 MPa liegt.

7. Verfahren nach Anspruch 2, dadurch gekennzeichnet, daß die hydrothermale Aushärtung bei einer Temperatur zwischen 56 und 90°C über eine Dauer von 3,5 bis 7,5 Stunden erfolgt.

8. Verfahren nach Anspruch 2, dadurch gekennzeichnet, daß die hydrothermale Aushärtung bei Dampfüberdruck und Temperaturen von über 100°C über eine Dauer von 3 bis 7 Stunden erfolgt.